# EUROPEAN PATENT SPECIFICATION

(11) **EP 0 962 008 B1**
(45) Date of publication and mention of the grant of the patent: **03.04.2002**
(21) Application number: 98957084.1
(22) Date of filing: 14.12.1998
(51) Int. Cl.: G09F 9/35, G02F 1/1343, H01J 17/49

(54) **DISPLAY DEVICE**
ANZEIGEVORRICHTUNG
DISPOSITIF D'AFFICHAGE

(30) Priority: 19.12.1997 EP 97204028
(43) Date of publication of application: 08.12.1999
(73) Proprietor: Koninklijke Philips Electronics N.V., 5621 BA Eindhoven (NL)
(72) Inventor: VAN SLOOTEN, Udo, NL-5656 AA Eindhoven (NL); SCHREUDERS, Herman, NL-5656 AA Eindhoven (NL); BOHMER, Marcel, R., NL-5656 AA Eindhoven (NL)
(74) Representative: van der Veer, Johannis Leendert
(86) International application number: IB9802025
(87) International publication number: WO9933046

(56) References cited:
- EP-A2- 0 762 460
- EP-A2- 0 798 738
- WO-A1-96/19750
- WO-A1-97/40485
- WO-A1-98/52179

## Description

The invention relates to a display device comprising at least one compartment containing an ionizable gas, walls of the compartment being provided with excitation electrodes covered with a sputter-resistant layer for selectively generating a plasma-discharge in the ionizable gas during operation, and said display device also comprising an electro-optical layer with a material having an optical property which is governed by the condition of the plasma-discharge.

These display devices comprise, inter alia, plasma-addressed liquid-crystal display devices (PALC displays) and (direct current) plasma display panels (PDPs). PALC displays and PDPs can very suitably be used as television and/or computer displays and are preferably flat-type.

A display device of the type mentioned in the opening paragraph is known from European patent application EP-A 0 726 460. The display device described in said document comprises a pattern of display elements. In operation, these display elements are driven in such a way that the viewer sees an image. By successively showing different images at an appropriate rate, the impression of a moving image can be created. How the drive mechanism works will be described hereinbelow.

The display device comprises compartments which are filled with an ionizable gas and provided with excitation electrodes. Said compartments are in the shape of parallel elongated channels arranged in a so-called channel plate. By applying a DC voltage difference across the excitation electrodes in a channel, electrons are emitted from one of the excitation electrodes (the cathode). These electrons ionize the gas, so that a plasma is formed. In this manner, the channels can be activated in turn and, thus, act as so-called "row electrodes". Hereinafter, this term will be used to denote said channels.

As the excitation electrodes are exposed, during operation, to a bombardment of ions, they must be protected. If they are not protected, parts of the electrodes will become detached during operation and cover the walls of the channels. This leads to a substantial decrease in transmission of light. In general, the electrodes are protected by covering them with a sputter-resistant layer. In the known display device, this layer is composed of particles of a sputter-resistant material mixed with glass frit, which is deposited by means of electrophoresis.

The channels of the channel plate are closed by means of a thin, dielectric layer (microsheet). This microsheet is provided with a cover plate to which a layer of an electro-optical material is applied. The display device also comprises column electrodes which extend in a direction at right angles to the direction of the row electrodes. In the display device, the plasma discharges cause the light-transmitting properties of the electro-optical layer to be changed during operation.

In a display device with a plasma display panel (PDP), the display elements comprise a phosphor. If the display device is a color display device, a display element comprises three different phosphors. During operation, the phosphors of the display elements are excited by means of a plasma discharge consisting of an ionized gas. The display device may be embodied so that the electrons originating from the ionized gas in the channel excite the phosphors. In this case, use is made of electroluminescent phosphors. The display device may alternatively be embodied so that the phosphors are excited by light (for example UV light) which is generated by the ionized gas. In that case, photoluminescent phosphors are used. The phosphors may be present in the channels or they may be situated in a layer above the channels.

A disadvantage of the known display device is that the energy consumption of this display device is relatively high. Another problem is the occurrence of brightly illuminating spots (so-called anode spots) when the display device is switched on.

It is an object of the invention to provide, inter alia, a display device having a lower energy consumption and more homogeneous gas discharges than the known device.

These objects are achieved by a display device which, in accordance with the invention, is characterized in that the sputter-resistant layer of at least one of the excitation electrodes covers this excitation electrode only partly.

The inventors have realized that the high energy consumption and the occurrence of anode spots can be attributed to too low a conductance of the sputter-resistant layer on the excitation electrodes. Surprisingly, it has been found that this conductance can be improved by using a layer which only partly covers the electrode and hence causes the energy consumption and the occurrence of anode spots to be reduced. The discharges become substantially homogeneous, so that there is hardly any patchiness of the image. The partial degree of coverage can be achieved by small open areas or openings in the sputter-resistant layer.

Since they are only partly covered, the electrodes are in contact, at some locations (the open areas), with the plasma and the electrons can be readily emitted. It has been found that a degree of surface coverage in the range from 30 to 99% leads to a much better conductance of the layer than a complete degree of coverage. In addition, it does not lead to excessive decrease in transmission during operation. If the degree of coverage is below 30%, the decrease in transmission is very high. If the degree of coverage is above 99%, the conductance is very low. An optimum compromise between both disadvantages is achieved if the degree of coverage of the electrodes ranges between 50 and 97%. Preferably, this degree of coverage is also achieved on a scale of 50 x 50 micrometers. By virtue thereof an extra homogeneous discharge can be achieved, during operation, since the open areas are very uniformly distributed over the surface of the electrode.

In accordance with a favorable embodiment of the invention, the sputter-resistant layer comprises particles of a sputter-resistant material, and the layer has a thickness which corresponds approximately to the particle size of the sputter-resistant material. The reason why it is favorable is that such a layer comprising open areas is easy to manufacture. In practice it has been found that a layer with open areas, with a particle size below 10 micrometers, is especially easy to provide. In addition, such a layer has a much higher conductance than a customary, thicker layer.

In accordance with a further, advantageous embodiment, the sputter-resistant layer comprises one of the following materials: a rare earth boride (for example LaB₆ or GdB₆), ruthenium oxide (RuO₂), Cr₃Si, diamond, diamond-like carbon or bariumtantalate (Ba₄Ta₂O₉). The reason why these materials are used is that they lead to a substantial reduction of the work function of the electrodes. Said lower work function causes the secondary emission coefficient to be increased, so that lower voltages are necessary to bring about and sustain the plasma discharge. This effect leads to a still lower energy consumption.

The most suitable material for the sputter-resistant layer is LaB₆. This can be provided more easily and more economically.

An additional advantage of said materials is that a particle size below 5 micrometers is possible. In the case of ground particles, even a particle size below 1 micrometer is possible. This enables a layer having a thickness below, respectively, 5 micrometers or 1 micrometer to be applied. By virtue thereof, the conductance of the layer can be further increased. In addition, such a layer can be applied more readily. In the case of a PALC display device, such a thin layer has the additional advantage that the aperture is larger than in a thicker layer, so that a greater light transmission is achieved.

Preferably, the not completely covering sputter-resistant layer is provided by means of electrophoresis. This process enables the formation of open areas in the layer to be controlled more readily as compared to other methods, such as lithography.

In accordance with a further preferred embodiment, the layer is substantially free of glass frit. The reduction of the quantity of glass frit leads to a higher secondary emission coefficient, which, in turn, leads to lower ignition and sustain voltages. As a result, less energy is necessary to ignite and sustain the plasma discharges, resulting in a particularly low energy consumption.

These and other aspects of the invention will be apparent from and elucidated with reference to the embodiments described hereinafter.

In the drawings:
Fig. 1 schematically shows the addressing system of a display device in accordance with the invention.
Fig. 2 is a schematic, spatial, partly cut-away view of a part of a plasma-addressed liquid-crystal display device in accordance with the invention.
Fig. 3 is a schematic, cross-sectional view of a part of an excitation electrode with a sputter-resistant layer of the display device shown in Fig. 2.

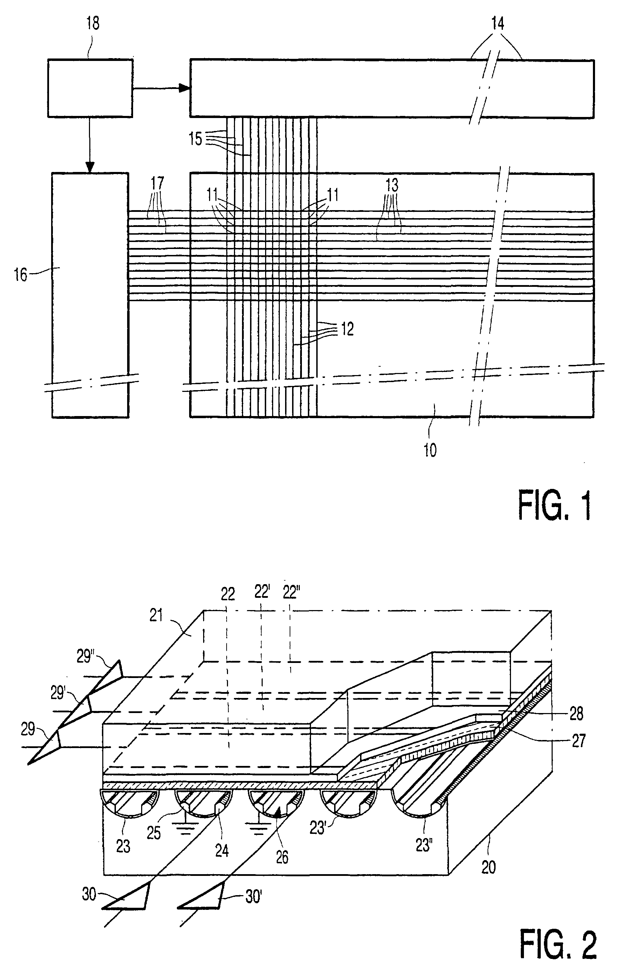

Fig. 1 is a schematic representation of the addressing system of a display device in accordance with the invention. The display device comprises a plate (10) which is provided with a regular pattern of pixels (11).

The display device further comprises column electrodes (12) and row electrodes (13), which serve to drive the pixels (11). Each pixel is situated at the location of the crossing of a specific column electrode and a specific row electrode. The latter electrodes can be used to activate the relevant pixel. In a plasma-addressed liquid-crystal display device, the row electrodes are composed of elongated channels containing an ionizable gas.

The column electrodes (12) are driven by a column drive circuit (14). This drive takes place via column drivers (15). The row electrodes (13) are driven by a row drive circuit (16) by means of row drivers (17). The column and row drivers are made from an electroconductive material and driving takes place by means of data drive signals. To display an image by means of the pixels, the drive circuits (14, 16) are operated by means of an image drive circuit or scan control circuit (18).

Fig. 2 schematically shows a spatial, partly cut-away view of a part of a plasma-addressed liquid-crystal display device in accordance with the invention. The addressing system of this display device is schematically shown in Fig. 1.

The display device comprises a channel plate (20) and a cover plate (21). The reference numerals (22, 22', 22") refer to column electrodes. The row electrodes, which are formed by elongated channels, are indicated by reference numerals (23, 23', 23"). The elongated channels are situated in the channel plate (20) and comprise at least two excitation electrodes (24, 25). One of the excitation electrodes is the anode (24), another excitation electrode is the cathode (25). The channels contain an ionizable gas (26) and are covered with an assembly comprising a thin dielectric layer (microsheet) (27), an electro-optical layer (28) and the cover plate (21).

The dielectric layer may be made, for example, of glass. The electro-optical layer comprises an electro-optical material which may be reflective (which reflects light) or transmissive (which passes light). The degree to which the material reflects or passes light is governed by the voltage applied across the material. If the display device is PALC-type (plasma-addressed liquid crystal), then the electro-optical layer comprises a liquid-crystal material. This material may be a (twisted) nematic or a ferro-electric liquid-crystal material.

The column electrodes (22, 22', 22") are driven by analog drive signals from column amplifiers (29, 29', 29"). The excitation electrodes (24), which serve as anode, are driven by drive signals originating from row amplifiers (30, 30').

During operation of the display device, a pulsed voltage is applied to the anode (24) of a channel. These pulses are referred to as "strobe pulses". The electrons, which are emitted by the cathode (25) with the aid of the strobe pulse, ionize the gas (26) in the relevant channel. In this way, a plasma is formed. In this case, the cathode (25) is grounded. Alternatively, a negative (direct-current) pulse may be supplied to the cathode (25).

In general, a subsequent channel is not activated until after the strobe pulse in the preceding channel has been ended and the gas de-ionized again. Alternatively, however, a subsequent channel may be activated earlier. This enables the cycle time in which the entire image is formed, to be shortened.

In accordance with the invention, at least one of the electrodes (24, 25) is provided with a conductive sputter-resistant layer which does not completely cover the electrode. By using this type of layer, the energy consumption of the display device in accordance with the invention is lower than that of the known display device. In addition, the conductance of the layer increases, so that much fewer anode spots occur and the discharge as a whole is substantially homogeneous. This results in a visually quiescent image. The column electrodes (22, 22', 22") each cross an entire column of pixels, thus precluding cross-talk; consequently, only one plasma row connection per unit of time is possible.

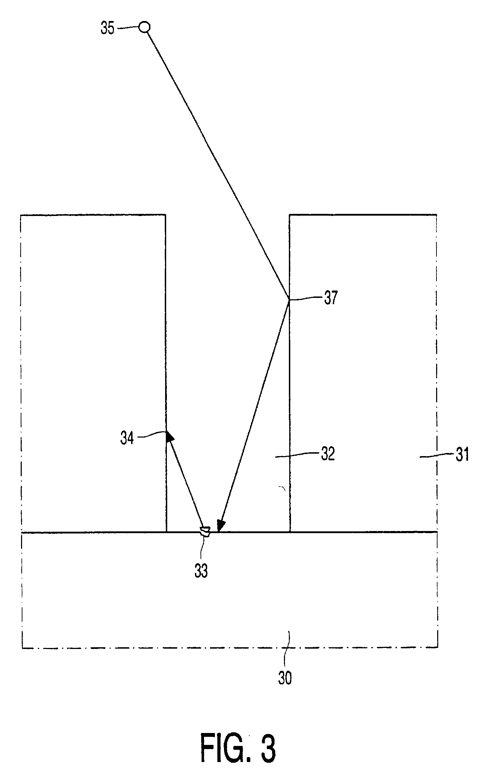

Fig. 3 schematically shows a cross-sectional view of a part of an excitation electrode with a sputter-resistant layer of the display device of Fig. 2. A sputter-resistant layer (31) is situated on an excitation electrode (30). As this layer has openings, it does not fully cover the electrode. As a result, the degree of coverage is not 100 percent. One of the openings (32) is shown in the Figure. In this case, the aperture has substantially straight walls and its depth dimension is larger than the width dimension. In practice, the layer comprises openings having different depth-width ratios and very different shapes.

The inventors have discovered that the quantity of material which is sputtered onto the channel walls as a result of ion bombardment is not directly proportional to the open area in the surface of the electrodes. It has namely been found that, if open areas (openings) are present, a substantial part of the sputtered-off material lands on the walls of the openings. Fig. 3 shows a path which a piece of sputtered-off material (33) follows before it lands on the wall of the hole (34). Another realization is that, owing to the high density of the plasma, the ions move rather slowly. As a result of the large number of collisions and mutual charge exchange, the ions will not reach a high velocity. The chance that ions enter an opening at a right angle and directly reach the electrode surface is small. It is very likely that they will first collide with the wall of the opening, as in the case of the ion 35 shown, which collides with the wall of the opening at the location indicated by reference numeral (37). This causes the velocity of the ions to become so low that, per (exposed) surface unit, the amount of sputtered-off material is much smaller than it would be if the electrode were left completely uncovered. This enables the conductance to be substantially increased by means of open areas in the sputter-resistant layer, without the protection of the excitation electrodes undergoing a substantial decrease.

By virtue of the open areas, the electrodes are in contact with the plasma and electrons can be readily emitted. It has been found that a degree of coverage of the surface below 99% yields a much better conductance than a degree of coverage of 100%. A degree of coverage below 97% results in a surprisingly good conductance. Too low a degree of coverage, however, may cause the protection against ion bombardment to be excessively affected, so that the transmission decreases too much during operation. It has been found that the decrease in transmission is very large if the degree of coverage is below 30%. Preferably, the degree of coverage of the electrodes is above 50%.

The sputter-resistant layer comprising open areas can be very readily provided by means of electrophoresis. In this process, the sputter-resistant particles are provided with a positive electric charge. Subsequently, a suspension of these particles is prepared. The suspension may comprise components such as isopropanol and/or water. The channel plate (20) is immersed in a bath comprising this suspension. On the channel side of the channel plate (20), a counter- plate is arranged in the bath. A voltage is applied between the excitation electrodes and said counter-plate, so that the sputter-resistant particles in the suspension move towards the excitation electrodes and are deposited thereon. To obtain a layer comprising open areas, the processing time is shortened and/or the voltage applied is reduced relative to a process in which a completely closed layer is obtained. Said shorter processing time and/or lower voltage causes the layer to be deposited incompletely, so that areas of the excitation electrodes remain uncovered.

A sputter-resistant layer whose thickness corresponds approximately to the particle size of the sputter-resistant material used is preferred because it is easy to manufacture such a layer with open areas. In practice, it has been found that a layer with open areas, comprising particles whose size is below 10 micrometers, is particularly easy to apply. It has also been found that such a layer has a much greater conductance than a customary, thicker layer.

It is best to use at least one of the following materials for the sputter-resistant layer: a rare earth boride (for example LaB₆ or GdB₆), ruthenium oxide (RuO₂), Cr₃Si, diamond, diamond-like carbon or bariumtantalate (Ba₄Ta₂O₉), because these materials substantially reduce the work function of the electrodes. The lower work function causes the secondary emission coefficient to be higher, so that lower voltages are necessary to bring about and sustain the plasma discharge. This effect leads to a further reduction in energy consumption. Particularly LaB₆ is a very suitable material because it is relatively cheap and easy to provide.

An additional advantage of these materials is that a particle size below 10 micrometers is possible. For example, LaB₆ enables a particle size below 5 micrometers to be achieved. If the particles are ground, it is even possible to achieve particle sizes below 1 micrometer. Thus, this material enables a layer to be provided whose thickness is below, respectively, 5 micrometers or 1 micrometer. This allows a still further increase of the conductance of the layer. In addition, such a thin layer can be provided more easily. These advantages apply to all display devices. In the case of a PALC display device, such a thin layer has the additional advantage that the aperture is larger than in a thicker layer and hence the transmission of light is higher.

In accordance with a preferred embodiment, the sputter-resistant layer is substantially free of glass frit. The absence of glass frit leads to a higher secondary emission coefficient, which in turn leads to lower ignition and sustain voltages. As a result, less energy is necessary to ignite and sustain the plasma discharges, resulting in a particularly low energy consumption. Normally, glass frit is indispensable because of its electroconductive properties. The reason is that, in powdered form, the sputter-resistant material is a poor conductor and needs the glass frit as a binder to bring the electroconductance to the desired minimum value. The use of the layer having open areas in accordance with the invention causes the electroconductance to be increased in such a manner that the glass frit can be dispensed with (almost) completely. This results in a minimization of the energy consumption.

## Claims

1. A display device (10) comprising at least one compartment (23) containing an ionizable gas, walls of the compartment being provided with excitation electrodes (24, 25) covered with a sputter-resistant layer for selectively generating a plasma-discharge in the ionizable gas during operation, and said display device also comprising an electro-optical layer (28) with a material having an optical property which is governed by the condition of the plasmadischarge, **characterized in that** the sputter-resistant layer (31) of at least one of the excitation electrodes covers this excitation electrode only partly.

2. A display device as claimed in claim 1, **characterized in that** the degree of coverage of the electrodes ranges from 30 to 99%.

3. A display device as claimed in claim 1, **characterized in that** the degree of coverage of the electrodes ranges from 50-97%.

4. A display device as claimed in claim 2 or 3, **characterized in that** the degree of coverage is achieved on a scale of 50 x 50 micrometers.

5. A display device as claimed in claim 1, **characterized in that** the sputter-resistant layer comprises particles of a sputter-resistant material, and the layer has a thickness which corresponds approximately to the particle size of the sputter-resistant material.

6. A display device as claimed in claim 1, **characterized in that** the layer is provided by means of electrophoresis.

7. A display device as claimed in claim 1, **characterized in that** the sputter-resistant layer comprises a material of the group formed by: rare earth borides, ruthenium oxide (RuO₂), Cr₃Si, diamond, diamond-like carbon or bariumtantalate (Ba₄Ta₂O₉).

8. A display device as claimed in claim 7, **characterized in that** the sputter-resistant layer comprises mainly LaB₆.

9. A display device as claimed in claim 1, **characterized in that** the sputter-resistant layer is substantially free of glass frit.

## Patentansprüche

1. Wiedergabeanordnung (10) mit wenigstens einem Abteil (23) mit einem ionisierbaren Gas, wobei Wände dieses Abteils mit Erregungselektroden (24, 25) versehen sind, die mit einer zerstäubungsbeständigen Schicht bedeckt sind zum im Betrieb selektiven Erzeugen einer Plasmaentladung in dem ionisierbaren Gas, und wobei die genannte Wiedergabeanordnung ebenfalls eine elektrooptische Schicht (28) aufweist mit einem Material mit einer optischen Eigenschaft, die durch die Kondition der Plasmaentladung gesteuert wird, **dadurch gekennzeichnet, dass** die zerstäubungsbeständige Schicht (31) wenigstens einer der Erregungselektroden diese Erregungselektrode nur teilweise bedeckt.

2. Wiedergabeanordnung nach Anspruch 1, **dadurch gekennzeichnet, dass** der deckungsgrad der Elektroden zwischen 30 und 99% liegt.

3. Wiedergabeanordnung nach Anspruch 1, **dadurch gekennzeichnet, dass** der deckungsgrad der Elektroden zwischen 50 und 97% liegt.

4. Wiedergabeanordnung nach Anspruch 2 oder 3, **dadurch gekennzeichnet, dass** der Deckungsgrad in einem Maßstab von 50 x 50 µm erreicht wird.

5. Wiedergabeanordnung nach Anspruch 1, **dadurch gekennzeichnet, dass** die zerstäubungsbeständige Schicht Teilchen eines zerstäubungsbeständigen Materials enthält, und die Schicht eine Dicke hat, die der Teilchengröße des zerstäubungsbeständigen Materials nahezu entspricht.

6. Wiedergabeanordnung nach Anspruch 1, **dadurch gekennzeichnet, dass** die Schicht mit Hilfe von Elektrophorese angebracht ist.

7. Wiedergabeanordnung nach Anspruch 1, **dadurch gekennzeichnet, dass** die zerstäubungsbeständige Schicht ein Material der Gruppe enthält, die durch die nachfolgenden Stoffe gebildet wird: Seltenerdboride, Rutheniumoxid (RuO₂), Cr₃Si, Diamant, diamantartiger Kohlenstoff oder Bariumtantalat (Ba₄Ta₂O₉).

8. Wiedergabeanordnung nach Anspruch 7, **dadurch gekennzeichnet, dass** die zerstäubungsbeständige Schicht hauptsächlich LaB₆ enthält.

9. Wiedergabeanordnung nach Anspruch 1, **dadurch gekennzeichnet, dass** die zerstäubungsbeständige Schicht im Wesentlichen frei von Glasurmasse ist.

## Revendications

1. Dispositif d'affichage (10) comportant au moins un compartiment (23) contenant un gaz ionisable, des parois du compartiment étant pourvues d'électrodes d'excitation (24, 25) qui sont recouvertes d'une couche résistant à la pulvérisation pour générer sélectivement pendant le fonctionnement une décharge de plasma dans le gaz ionisable, et ledit dispositif d'affichage comprenant également une couche électro-optique (28) avec un matériau ayant une propriété optique qui dépend de la condition de la décharge de plasma, **caractérisé en ce que** la couche résistant à la pulvérisation (31) d'au moins une des électrodes d'excitation ne recouvre que partiellement l'électrode d'excitation.

2. Dispositif d'affichage selon la revendication 1, **caractérisé en ce que** le degré de couverture des électrodes se situe dans la gamme comprise entre 30 et 99%.

3. Dispositif d'affichage selon la revendication 1, **caractérisé en ce que** le degré de couverture des électrodes se situe dans la gamme comprise entre 50 et 97%.

4. Dispositif d'affichage selon la revendication 2 ou 3, **caractérisé en ce que** le degré de couverture est réalisé sur une échelle de 50 x 50 micromètres.

5. Dispositif d'affichage selon la revendication 1, **caractérisé en ce que** la couche résistant à la pulvérisation comprend des particules constituées d'un matériau résistant à la pulvérisation et **en ce que** la couche présente une épaisseur qui correspond approximativement à la grosseur de particules du matériau résistant à la pulvérisation.

6. Dispositif d'affichage selon la revendication 1, **caractérisé en ce que** la couche est appliquée par électrophorèse.

7. Dispositif d'affichage selon la revendication 1, **caractérisé en ce que** la couche résistant à la pulvérisation comprend un matériau du groupe étant formé par des borures de terre rare, par de l'oxyde de ruthénium (RuO₂), par Cr₃Si, par du diamant, par du carbone ressemblant au diamant ou par du tantalate de baryum (Ba₄Ta₂O₉).

8. Dispositif d'affichage selon la revendication 7, **caractérisé en ce que** la couche résistant à la pulvérisation comprend principalement LaB₆.

9. Dispositif d'affichage selon la revendication 1, **caractérisé en ce que** la couche résistant à la pulvérisation est sensiblement exempte de frittes de verre.
